# FASCICULE DE BREVET EUROPEEN

(11) **EP 4 605 203 B1**
(45) Date de publication et mention de la délivrance du brevet: **14.10.2026**
(21) Numéro de dépôt: 23790594.8
(22) Date de dépôt: 16.10.2023
(51) Int. Cl.: B29B 15/12

(54) **INSTALLATION D'IMPREGNATION D'UN MATERIAU POREUX PAR DE LA POUDRE**
ANLAGE ZUM IMPRÄGNIEREN EINES PORÖSEN MATERIALS MIT PULVER
INSTALLATION FOR IMPREGNATING A POROUS MATERIAL WITH POWDER

(30) Priorité: 19.10.2022 FR 2210825
(43) Date de publication de la demande: 27.08.2025
(73) Titulaire: Fibroline, 69760 Limonest (FR)
(72) Inventeur: MARDUEL, Joric, 69380 CHAZAY D'AZERGUES (FR)
(74) Mandataire: Ipsilon
(86) Numéro de dépôt international: PCT/EP2023/078593
(87) Numéro de publication internationale: WO 2024/083700

(56) Documents cités:
- EP-B1- 2 331 309
- US-A1- 2009 151 874
- US-A1- 2017 368 718
- US-A1- 2018 014 568
- US-B2- 7 534 473

## Description

### Domaine technique

L'invention se rattache au domaine des installations d'imprégnation de supports poreux par des matériaux pulvérulents.

L'invention trouve de multiples applications dans de nombreux domaines, en fonction du type de support et de la poudre utilisée.

A titre d'exemple, on peut citer la réalisation de canaux absorbants dans les couches destinées aux nourrissons.

### Technique antérieure

L'imprégnation d'un support poreux par une poudre permet avantageusement d'en modifier les propriétés. Pour ce faire, différentes techniques peuvent être employées. De manière générale, ces techniques consistent à faire pénétrer la poudre dans les pores ou dans le réseau de fibres du support par l'intermédiaire d'un dispositif mécanique, pneumatique, électrostatique, ou par le biais de solvants...

Le brevet EP 2 331 309 du Demandeur décrit une installation d'imprégnation d'un support poreux comprenant deux électrodes situées en regard l'une de l'autre et aptes à produire un champ électrique alternatif au niveau de l'espace localisé entre ces deux électrodes. Le support et la poudre sont confinés entre deux convoyeurs aptes à transporter le support et la poudre jusqu'à l'espace localisé entre les deux électrodes. Sous l'effet du champ électrique généré par les électrodes, la poudre est mise en mouvement de manière quasi aléatoire dans toutes les directions. La poudre pénètre ainsi au sein des pores du support pour l'imprégner dans toute son épaisseur, idéalement de manière homogène. Une telle installation permet avantageusement de confiner la poudre en mouvement et d'en limiter les pertes.

Une telle installation est en outre prévue pour des supports de grandes dimensions, typiquement entre 0,5m et 6 m de largeur et jusqu'à plusieurs mètres de longueur. Ainsi, les électrodes présentent également de grandes dimensions dans le but d'établir un champ électrique sensiblement homogène permettant une imprégnation également homogène du support poreux par la poudre.

On observe cependant que la mise en mouvement sur la totalité de la largeur du support poreux provoque une distribution de la poudre qui n'est pas identique sur tout le support. A titre d'exemple, la poudre tend à s'échapper par les ouvertures latérales de l'installation, ce qui tend à créer une moindre concentration de poudre sur les bordures du support poreux. On observe également que pour des matériaux très peu denses et très ouverts, le matériau peut présenter une épaisseur variable en fonction de la manière dont il a été disposé sur le convoyeur inférieur. Ainsi, la poudre se répartit différemment au sein du matériau poreux en fonction de son état de compaction.

### Résumé de l'invention

L'invention est issue d'une découverte surprenante selon laquelle le positionnement d'organes perpendiculairement au plan du convoyeur inférieur et venant au contact d'une partie seulement dudit matériau poreux, par le dessous et/ou par le dessus, permet d'obtenir une accumulation de la poudre dans la région proche de ces organes. Le Demandeur avait cependant imaginé qu'en positionnant les organes de cette manière, il obtiendrait une répartition homogène de la poudre au sein de zones de confinement définies entre lesdits organes.

En d'autres termes, le Demandeur a mis au point une installation d'imprégnation d'un matériau poreux par de la poudre, comprenant :
- des première et deuxième électrodes générant un champ électrique au sein d'une zone de champ électrique, lesdites électrodes étant disposées de part et d'autre de ladite zone de champ électrique, ladite zone de champ électrique étant traversée par le matériau poreux pourvu de poudre, le champ électrique permettant la mise en mouvement de ladite poudre par rapport au matériau poreux,
- un convoyeur inférieur apte à entrainer en mouvement le matériau poreux pourvu de poudre entre les première et deuxième électrodes, et
- une zone de distribution de poudre au niveau de laquelle la poudre est déposée sur le matériau poreux, ladite zone de distribution étant située en amont de la zone de champ électrique. Ce dépôt de poudre se fait de manière homogène, c'est-à-dire sur toute la largeur du matériau poreux, ou à tout le moins sur une zone continue qui englobe la région dans laquelle l'imprégnation est souhaitée.

L'invention se caractérise en ce que l'installation comporte en outre des organes s'étendant perpendiculairement au plan du convoyeur inférieur et venant au contact d'une partie seulement dudit matériau poreux.

Selon l'invention, « une partie seulement » du matériau poreux est en contact avec des organes. Autrement dit, la surface du matériau poreux présente des premières zones en contact avec les organes et des secondes zones libres, entre les organes. Ces zones libres forment des cavités au sein desquelles la poudre peut se mouvoir et prendre de la vitesse pour mieux pénétrer au sein des pores du matériau poreux. En pratique, une certaine fraction du matériau poreux reçoit le contact des organes, et cette fraction est variable selon le type de matériau et l'application. Ainsi, à titre d'exemple, une proportion de l'ordre de 5 à 30% du matériau poreux peut être en contact avec des organes. L'appui des organes sur le matériau poreux assure un léger écrasement de celui-ci. Les organes permettent donc avantageusement de lisser les variations d'épaisseur observées lors que le matériau est particulièrement peu dense et ouvert.

L'invention permet ainsi d'obtenir un profil de distribution de poudre dans lequel la poudre est concentrée sur des zones réduites formées à proximité des organes. Le profil de répartition de la poudre peut s'apparenter à une gaussienne inversée, pour laquelle la concentration de poudre est plus importante aux extrémités et plus faible au centre. L'invention permet ainsi de contrôler plus finement la répartition de la poudre et de créer des motifs sur le matériau poreux.

L'invention peut par exemple être utilisée pour apporter des propriétés particulières au matériau poreux dans des régions très localisées. Typiquement, l'invention peut être utilisée pour tracer les canaux d'absorption notamment présents dans les couches absorbantes pour bébés.

L'invention peut également être utilisée pour créer des zones localisées de renforts de résine en poudre dans un textile technique ou dans un textile de revêtement tel qu'utilisé dans un pavillon automobile.

En pratique, la poudre est préalablement déposée de manière relativement homogène sur le matériau poreux, qui repose sur le convoyeur inférieur. Les organes sont ensuite positionnés sur l'ensemble formé par le matériau poreux recouvert de poudre, puis le tout est soumis au champ électrique des électrodes. La poudre est ainsi mise en mouvement et acquiert une vitesse suffisante pour permettre sa pénétration au sein de pores du matériau poreux. Selon la géométrie des organes caractéristiques, une fraction de la poudre déposée en aval de la zone de champ électrique se trouve bloquée entre les organes et la surface supérieure du support poreux, avec une capacité limitée à se déplacer, en particulier à pénétrer dans le matériau poreux.

On a observé de manière surprenante que la présence des organes permet avantageusement d'augmenter la quantité de poudre à proximité de ces organes, malgré une densification du matériau qui devrait intuitivement réduire la quantité de poudre pénétrant dans cette zone. Cet effet inattendu de concentration peut s'expliquer, a posteriori, d'une part par un effet de concentration des champ électriques au voisinage, d'autre part par un effet de rétention de la zone densifiée.

Différents modes de réalisation des organes sont envisageables.

Les organes peuvent par exemple être localisés au-dessous du matériau poreux, entre le convoyeur inférieur et le matériau poreux.

Pour ce mode de réalisation, le matériau poreux repose sur les organes. Le matériau poreux présente une épaisseur variable. En effet, le matériau se relâche entre les points de contact avec les organes, sous l'effet de son propre poids. De même que précédemment, les zones de contact avec les organes présentent au final une concentration plus importante de poudre dans le matériau.

Les organes peuvent également être localisés au-dessus du matériau poreux.

Dans ce mode de réalisation, le matériau poreux repose sur le convoyeur inférieur et les organes viennent en appui sur le matériau poreux, par le dessus. L'appui des organes sur le matériau poreux crée des zones où l'épaisseur est légèrement inférieure et où le matériau est plus compacté.

Bien entendu, on peut également envisager des modes de réalisation dans lesquels les organes sont localisés à la fois au-dessus et au-dessous du matériau poreux, de sorte à obtenir un motif d'imprégnation sur chaque face du matériau poreux, ou encore pour renforcer la pénétration de la poudre dans le matériau poreux en appliquant une pression sur le matériau depuis le dessus et le dessous.

Selon un autre mode de réalisation, les organes définissent un ensemble de régions sur la surface du matériau poreux en regard de laquelle ils sont situés, lesdites régions étant fermées.

Autrement formulé, les organes sont disposés de sorte à former, à l'aide des convoyeurs, des cavités fermées, dont la base présente un contour fermé, par exemple de forme polygonale, au sein de laquelle la poudre est confinée, mais peut tout de même se mouvoir.

Pour ce mode de réalisation, on observe ainsi que la poudre se concentre au niveau des parois de la cavité, imprimant ainsi le motif du polygone sur le matériau poreux.

Selon un autre mode de réalisation, les organes forment un ensemble de protubérances séparées les unes des autres.

Ces protubérances peuvent par exemple prendre la forme de pointes venant appuyer sur le matériau poreux de manière très localisée. En variante, les protubérances peuvent avoir une forme plus allongée. La surface de contact entre les organes et le matériau poreux s'étend alors dans une direction parallèle au plan du convoyeur.

A titre d'exemple, les organes peuvent être des lignes parallèles à la direction d'avancement du matériau poreux, ou encore des lignes transversales par rapport à cette même direction.

Selon un autre mode de réalisation, les organes sont solidaires du convoyeur inférieur. Avantageusement, l'installation peut comprendre en outre un convoyeur supérieur, afin de prendre en sandwich le matériau poreux et de le faire avancer. Les organes peuvent alors être solidaires du convoyeur supérieur. Le convoyeur supérieur est par exemple un convoyeur à bande ou encore un rouleau.

Selon un autre mode de réalisation, une des électrodes est cylindrique et le matériau poreux est plaqué sur ce cylindre. Les organes sont alors constitués par un revêtement avantageusement diélectrique du cylindre, avec des zones proéminentes formant entre elles des motifs en creux selon une géométrie spécifique afin d'obtenir des motifs d'imprégnation avec des concentrations de poudre à proximité des zones de contact entre les organes et le matériau.

### Description sommaire des figures

D'autres avantages et caractéristiques de l'invention apparaitront à la lecture de la description suivante, donnée à titre d'exemple illustratif et non limitatif en référence aux figures annexées suivantes.
[Fig1] La figure 1 est une vue schématique en coupe longitudinale d'une installation d'imprégnation selon un premier mode de réalisation de l'invention,
[Fig2] La figure 2 est une vue schématique en coupe longitudinale d'une installation d'imprégnation selon un deuxième mode de réalisation de l'invention,
[Fig3] La figure 3 est une vue schématique en coupe longitudinale d'une installation d'imprégnation selon un troisième mode de réalisation de l'invention,
[Fig4] La figure 4 est une vue en perspective du dessus d'organes selon un premier mode de réalisation,
[Fig5] La figure 5 est une vue en perspective du dessus d'organes selon un deuxième mode de réalisation, et
[Fig6] La figure 6 est une vue en perspective du dessus d'organes selon un troisième mode de réalisation,

### Manières possibles de réaliser l'invention

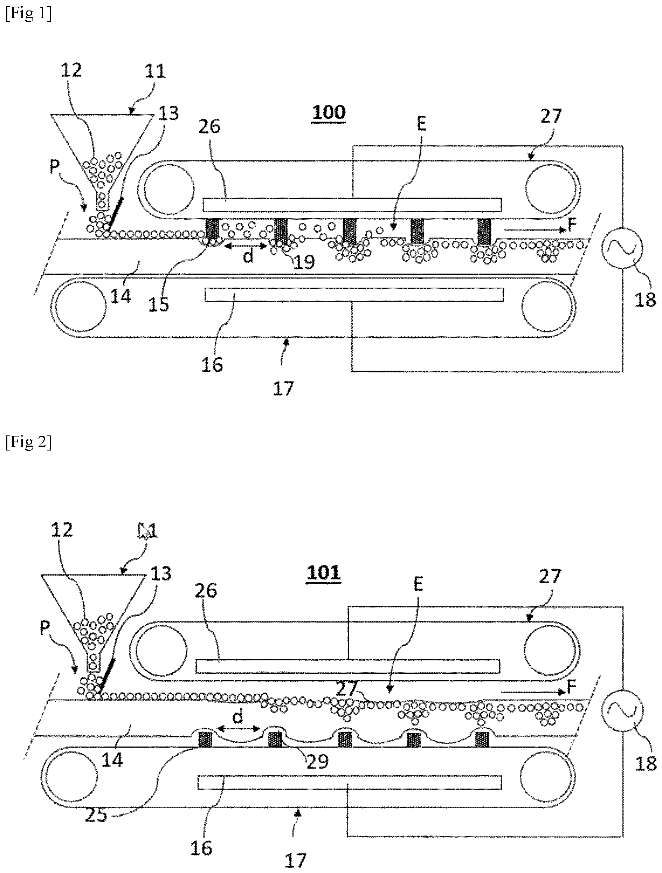

Sur les figures 1 à 3 est représentée une installation d'imprégnation **100-102,** traversée par un matériau poreux **14** imprégné de poudre **12,** qui progresse dans le sens matérialisé par la flèche **F.** Les dessins sont donnés à titre illustratif. Les proportions peuvent ainsi différer de la réalité, uniquement dans le but d'améliorer la compréhension de l'invention.

L'installation d'imprégnation **100-102** comporte une paire d'électrodes **16, 26** en regard. Chaque électrode **16, 26** est connectée à l'une des deux bornes d'une source ou générateur de tension alternative **18.** Lorsqu'elles sont alimentées en tension, les électrodes **16, 26** génèrent un champ électrique au sein d'une zone de champ électrique **E.**

Chacune de ces deux électrodes **16, 26** intègre une plaque réalisée dans un matériau diélectrique, qui forme un écran isolant. Les écrans sont placés sur les faces en regards des deux électrodes **16, 26,** de manière à les isoler électriquement l'une de l'autre.

Dans les exemples représentés, un dispositif d'entraînement du matériau poreux **14,** selon le sens de progression **F,** comporte deux convoyeurs à bande **17, 27,** qui sont disposés en regard, de manière à être sensiblement parallèles entre eux. Les bandes respectives de ces deux convoyeurs **17, 27** passent dans la zone de champ électrique **E** formée entre les deux électrodes **16, 26,** où elles progressent parallèlement et dans le même sens **F.** Après avoir saisi entre elles le matériau poreux **14,** ces bandes peuvent l'entraîner le long de la zone de champ électrique **E.** Avantageusement, afin qu'il soit possible d'entraîner des matériau poreux **14** de différentes épaisseurs, l'écartement entre les convoyeurs **17, 27** ainsi que les électrodes 16,26 est réglable. De manière alternative, le dispositif d'entraînement du matériau poreux peut ne comprendre qu'un seul convoyeur inférieur **17,** sur lequel repose le matériau poreux **14.**

Le matériau poreux **14** est préalablement saupoudré sur sa face supérieure avec la poudre **12** contenue dans le réservoir **11.** La zone de distribution de poudre **P** au niveau de laquelle la poudre **12** est déposée sur le matériau poreux **14** est située en amont de la zone de champ électrique **E** et donc en amont des électrodes **16, 26.**

Le saupoudrage est réalisé de manière uniforme sur l'ensemble de la surface du matériau **14** à imprégner. A cet effet, le réservoir **11** peut être muni de moyens de distribution de la poudre, tels qu'une vis sans fin. Alternativement, une râcle **13** peut être disposée en sortie du réservoir **11,** de sorte à étaler la poudre uniformément sur la surface du matériau poreux **14.** En outre, au moins une partie de la poudre **12** peut ne pas être déposée sur le dessus du matériau poreux **14,** mais être introduite en dessous du matériau poreux **14,** avant le passage entre les électrodes **16, 26,** par exemple en étant déposée sur le convoyeur inférieur **17,** modifié en conséquence.

La poudre **12** peut correspondre à des particules de diamètre depuis l'échelle nanométrique jusqu'à quelques centaines de microns. Elle peut être constituée de particules de polymère destinées à être fondues pour, après refroidissement, former la matrice d'un matériau composite renforcé par les fibres du matériau poreux **14** ou assurer la cohésion d'un revêtement textile tel qu'un tapis, en unissant les fibres de ce revêtement textile par exemple au niveau d'une zone de liaison. Il peut également s'agir d'une argile de la famille des bentonites ou d'un principe actif, typiquement une poudre super-absorbante, un agent antibactérien, un agent colorant, un agent anti-feu...

Par ailleurs, le matériau **14** destiné à être imprégné par la poudre **12** peut être une nappe constituée de fibres. Les fibres de la nappe peuvent se présenter sous la forme d'un mat, dont les fibres sont par exemple liées entre elles par aiguilletage ou de toute autre manière. Alternativement, le matériau **14** peut ne pas être fibreux et être constitué d'une mousse, tout en étant poreux de manière à pouvoir être imprégné.

Des organes **15, 25, 35, 45** sont également présents au sein de la zone de champ électrique **E.** Ces organes s'étendent perpendiculairement au plan des convoyeurs **17, 27** et viennent au contact du matériau poreux pourvu de poudre **12,** de sorte qu'une partie seulement du matériau poreux **14** est en contact avec les organes. Des zones sont ainsi laissées libres entre les zones de contact avec les organes **15, 25, 35, 45.** Ces zones sont destinées à confiner la poudre **12** et à lui permettre de se mouvoir et de gagner une vitesse suffisante pour pouvoir pénétrer dans les pores du matériau **14** et l'imprégner.

Tel qu'illustré sur la figure 1, l'installation **100** peut comprendre des organes **15** positionnés entre le convoyeur supérieur **27** et la face supérieure du matériau poreux **14** recouvert de poudre **12.** Les organes **15** peuvent être solitaires du convoyeur supérieur **27** ou encore en être indépendants.

Lorsque les organes **15** sont indépendant du convoyeur supérieur **27,** ils sont positionnés sur la surface du matériaux poreux **14** recouvert de poudre **12,** préalablement au passage au sein de la zone de champ électrique **E.**

Les organes **15** peuvent également être indépendants les uns des autres. Ce sont alors des joncs présentant par exemple une forme parallélépipédique d'une hauteur comprise entre 0.2 et 1 cm et d'une largeur comprise entre 0.5 et 3 cm. Ils sont généralement disposés régulièrement sur la surface du matériau poreux **14,** espacés d'une distance **d.** La distance **d** peut cependant varier le long du matériau poreux **14,** selon les besoins. Ils peuvent ainsi être disposés avec un motif répétitif, pour constituer un renfort par exemple, ou bien uniquement aux extrémités du matériaux, pour constituer une barrière anti-fuites par exemple Des cavités ou régions fermées sont ainsi formées, avec pour délimitations latérales, les joncs, et pour délimitation supérieure le convoyeur supérieur **27.** La poudre **12** est confinée au sein de ces cavités. Elle peut s'y mouvoir et acquérir la vitesse nécessaire pour pouvoir pénétrer les pores du matériau poreux **14.**

Avantageusement, un système d'introduction des joncs sur le matériau poreux **14** peut être mis en place entre le réservoir **11** et le convoyeur **17.**

Au niveau de la zone de contact avec les organes **15,** une déformation **19** se crée sur la partie supérieure du matériau poreux **14,** créant ainsi une densification des fibres du matériau poreux **14.** Ces zones denses favorisants ainsi le captage d'une plus grande quantité de poudre **12.** On observe alors une accumulation de poudre plus importante au niveau de la zone à proximité des organes **15.** Dans certains cas où la compaction est limitée, la zone de contact, sous les organes, présente également une concentration de poudre plus importante. On peut supposer que les organes influent sur la répartition du champ électrique en distordant les équipotentielles ce qui impose des mouvements spécifiques de la poudre, et globalement participe à l'obtention de la concentration de poudre.

Les organes **15** peuvent également être liés les uns aux autres par un cadre ou un support. Il suffit alors de disposer le cadre sur la face supérieure du matériau poreux **14.** A cet effet, un système d'introduction des plaques peut être mis en place en amont du convoyeur **17** pour déposer une nouvelle plaque à mesure que le matériau fibreux **14** avance le long du convoyeur **17.**

Le cadre est alors une plaque ajourée dont les organes **15** forment les partes pleines. Les parties vides ou ajourées forment alors, avec le convoyeur supérieur **27,** les cavités permettant de confiner la poudre **12.** Les parties ajourées peuvent adopter des formes variées telles que des ronds, des carrés, des alvéoles ou plus généralement toute forme polygonale.

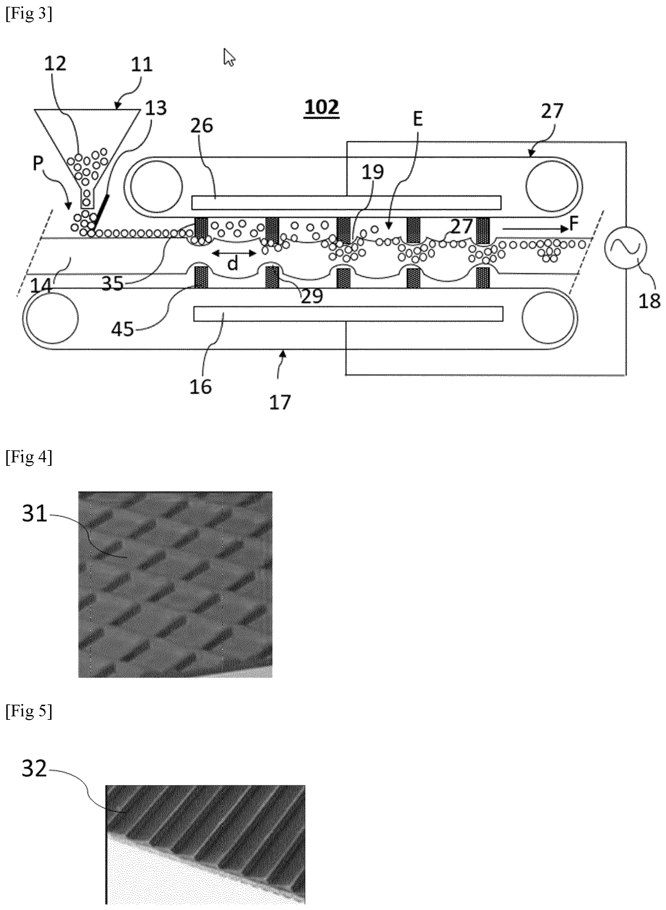

Lorsque les organes **15** sont solidaires du convoyeur supérieur **27,** plusieurs configurations sont envisageables. Le convoyeur supérieur **27** peut se présenter sous la forme d'un convoyeur à bande, dont la bande lisse a été remplacée par une bande présentant des protubérances s'étendant perpendiculairement au plan du convoyeur, tel que représenté sur les figures 4 à 6. En variante, le convoyeur supérieur **27** peut être un rouleau dont la surface est gravée pour former les protubérances, ou encore un rouleau recouvert d'une plaque souple présentant les protubérances.

Ainsi, tel qu'illustré sur la figure 4, les protubérances peuvent être jointives, formant ainsi un quadrillage délimitant les régions **31** au sein desquelles la poudre est confinée.

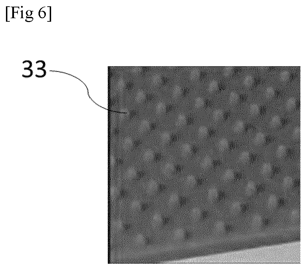

En variante, tel qu'illustré sur les figures 5 et 6, les protubérances sont séparées les unes des autres. Elles peuvent par exemple adopter une forme allongée 32, tel qu'illustré sur la figure 5. Les protubérances se présentent ainsi sous la forme de lignes parallèles entre elles, espacées d'une distance comprise entre 0.1 et 10 cm.

Les protubérances peuvent encore adopter une forme de pointe **33,** tel qu'illustré sur la figure 6. Les protubérances sont alors de forme sensiblement conique ou tronconique pour limiter le contact avec le matériau poreux **14** à une zone très restreinte et très précise, ce qui permet d'obtenir un motif en pointillés.

Pour ces trois exemples, la hauteur des protubérances est comprise entre 0.1 et 1 cm.

Tel qu'illustré sur la figure 2, l'installation **101** peut alternativement comprendre des organes **25** positionnés entre le convoyeur inférieur **17** et la face inférieure du matériau poreux **14.** De même que pour la figure 1, les organes **25** peuvent être solidaires du convoyeur inférieur **17** ou encore en être indépendants.

Lorsque les organes **25** sont indépendant du convoyeur inférieur **27,** ils sont positionnés sur le convoyeur inférieur **27,** avant d'être recouverts du matériaux poreux **14.**

Les organes **15** peuvent également être indépendants les uns des autres. Les cavités fermées sont ainsi formées, avec pour délimitations latérales, les organes **25,** et pour délimitation inférieure le convoyeur supérieur **27.** La poudre **12,** qui traverse le matériau poreux **14,** ou qui est préalablement disposée sous le matériau poreux **14,** est confinée au sein de ces cavités. Elle peut s'y mouvoir et regagner de la vitesse pour pouvoir pénétrer à nouveau les pores du matériau poreux **14.**

Au niveau de la zone de contact entre les organes **25** et la face inférieure du matériau poreux **14,** une déformation **29**se crée avec une densification des fibres du matériau poreux **14.** Ces zones denses favorisent ainsi le captage d'une plus grande quantité de poudre. On observe alors une accumulation de poudre plus importante au niveau de la zone du matériau poreux **14** à proximité des organes **25.**

Les organes **25** peuvent également être liés les uns aux autres par un cadre ou un support. Il suffit alors de disposer le cadre sur le convoyeur inférieur **17.** Les parties ajourées forment alors, avec le convoyeur inférieur **17,** les cavités permettant de confiner la poudre **12.**

Lorsque les organes **25** sont solidaires du convoyeur inférieur **17,** celui-ci peut se présenter sous la forme d'un convoyeur à bande, dont la bande lisse a été remplacée par une bande présentant des protubérances telles que représentées sur les figures 4 à 6. Les organes **25** avancent ainsi avec le convoyeur inférieur **17,** en même temps que le matériau poreux **14.**

Tel qu'illustré sur la figure 3, l'installation **102** peut comprendre des organes **35, 45** positionnés à la fois entre le convoyeur inférieur **17** et la face inférieure du matériau poreux **14** et entre le convoyeur supérieur **27** et la face supérieure du matériau poreux **14.** Les organes **35, 45** peuvent adopter les mêmes configurations que celles décrites en référence aux figures 1 et 2. Les organes supérieurs **35** et inférieurs **45** peuvent être alignés ou disposés en quinconce, selon les résultats souhaités.

En pratique, les convoyeurs **17, 27** amènent le matériau poreux **14,** la poudre **12** et le cas échéant les organes **15, 25, 35, 45** ensembles au sein de la zone de champ électrique **E** et les y font progresser d'une manière sensiblement continue. Au sein de la zone de champ électrique **E,** le champ électrique alternatif généré par les électrodes **16, 26** met en mouvement la poudre au sein des régions ou cavités délimitées par les organes **15, 25, 35, 45** et les convoyeurs **17, 27** et fait pénétrer la poudre **12** dans les pores du matériau poreux **14.** Comme il est alternatif, le champ généré entre les électrodes **16, 26** possède un maximum, dont la valeur est choisie selon l'application, notamment selon les particularités du matériau poreux **14** et/ou celles de la poudre **12.** Des valeurs de ce maximum comprises entre 0,10 et 20 kV/mm ont convenu dans nombre d'applications. Par ailleurs, la tension d'alimentation des électrodes **16, 26** peut présenter diverses formes. Par exemple, le générateur **18** peut produire une tension sinusoïdale, ou carrée, ou bien encore triangulaire.

La fréquence du champ électrique généré entre les électrodes **16, 26** est choisie en fonction de l'application. Des fréquences comprises entre 50 et 60 Hz ont convenu dans nombre d'applications.

L'imprégnation souhaitée n'est obtenue qu'après que le matériau fibreux **14** et la poudre **12** ont été exposées au champ électrique alternatif pendant un temps suffisant. Celui-ci dépend de l'application et d'autres paramètres de procédé.

## Revendications

1. Installation (100-102) d'imprégnation d'un matériau poreux (14) par de la poudre (12), comprenant :
- des première et deuxième électrodes (16, 26) générant un champ électrique au sein d'une zone de champ électrique (E), lesdites électrodes (16, 26) étant disposées de part et d'autre de ladite zone de champ électrique (E), ladite zone de champ électrique (E) étant traversée par le matériau poreux (14) pourvu de poudre (12), le champ électrique permettant la mise en mouvement de ladite poudre (12) par rapport au matériau poreux (14),
- un dispositif d'entrainement (17) incluant un convoyeur inférieur (17), disposé sous le matériau poreux, apte à entrainer en mouvement le matériau poreux (14) pourvu de poudre (12) entre les première et deuxième électrodes (16, 26), et
- une zone de distribution de poudre (P) au niveau de laquelle la poudre (12) est déposée sur la largeur du matériau poreux (14), ladite zone de distribution (P) étant située en amont de la zone de champ électrique (E), ***caractérisée en ce que*** l'installation comporte en outre des organes (15, 25, 35, 45) s'étendant perpendiculairement au plan du convoyeur (17) et venant au contact d'une partie seulement dudit matériau poreux (14).

2. Installation selon la revendication 1, ***caractérisée en ce que*** les organes (25, 45) sont localisés au-dessous du matériau poreux (14), entre le convoyeur inférieur (17) et le matériau poreux (14).

3. Installation selon la revendication 1, ***caractérisée en ce que*** les organes (15, 35) sont localisés au-dessus du matériau poreux (14).

4. Installation selon la revendication 1, ***caractérisée en ce que*** les organes définissent un ensemble de régions (31) sur la surface du matériau poreux (14) en regard de laquelle ils sont situés, lesdites régions (31) étant fermées.

5. Installation selon la revendication 1, ***caractérisée en ce que*** les organes forment un ensemble de protubérances (32, 33) séparées les unes des autres.

6. Installation selon la revendication 1, ***caractérisée en ce que*** la surface de contact entre les organes (32) et le matériau poreux (14) s'étend dans une direction parallèle au plan du convoyeur inférieur (17).

7. Installation selon la revendication 1, ***caractérisée en ce que*** les organes sont solidaires du convoyeur inférieur (17).

8. Installation selon la revendication 1, ***caractérisée en ce qu**'*elle comprend en outre un convoyeur supérieur (27), les organes étant solidaires du convoyeur supérieur (27).

## Patentansprüche

1. Anlage (100-102) zum Imprägnieren eines porösen Materials (14) mit Pulver (12), umfassend:
- eine erste und eine zweite Elektrode (16, 26), die innerhalb eines elektrischen Feldbereichs (E) ein elektrisches Feld erzeugen, wobei die Elektroden (16, 26) beiderseits des elektrischen Feldbereichs (E) angeordnet sind, wobei der elektrische Feldbereich (E) von dem mit Pulver (12) versehenen porösen Material (14) durchquert wird, wobei das elektrische Feld dazu führt, dass das Pulver (12) in Bezug auf das poröse Material (14) in Bewegung versetzt wird,
- eine Antriebsvorrichtung (17) mit einem unterhalb des porösen Materials angeordneten unteren Förderer (17), der in der Lage ist, das mit Pulver (12) versehene poröse Material (14) zwischen der ersten und der zweiten Elektrode (16, 26) in Bewegung zu versetzen, und
- einen Bereich zur Verteilung des Pulvers (P), in dem das Pulver (12) über die gesamte Breite des porösen Materials (14) aufgebracht wird, wobei sich der Verteilungsbereich (P) vorgelagert zum elektrischen Feldbereich (E) befindet, ***dadurch gekennzeichnet, dass*** die Anlage außerdem Elemente (15, 25, 35, 45) umfasst, die sich senkrecht zur Ebene des Förderers (17) erstrecken und nur mit einem Teil des porösen Materials (14) in Kontakt kommen.

2. Anlage nach Anspruch 1, ***dadurch gekennzeichnet, dass*** sich die Elemente (25, 45) unterhalb des porösen Materials (14) zwischen dem unteren Förderer (17) und dem porösen Material (14) befinden.

3. Anlage nach Anspruch 1, ***dadurch gekennzeichnet, dass*** sich die Elemente (15, 35) oberhalb des porösen Materials (14) befinden.

4. Anlage nach Anspruch 1, ***dadurch gekennzeichnet, dass*** die Elemente eine Reihe von Bereichen (31) auf der Oberfläche des porösen Materials (14) definieren, gegenüber der sie angeordnet sind, wobei diese Bereiche (31) geschlossen sind.

5. Anlage nach Anspruch 1, ***dadurch gekennzeichnet, dass*** die Elemente eine Reihe von voneinander getrennten Auswölbungen (32, 33) bilden.

6. Anlage nach Anspruch 1, ***dadurch gekennzeichnet, dass*** sich die Kontaktfläche zwischen den Elementen (32) und dem porösen Material (14) in einer Richtung parallel zur Ebene des unteren Förderers (17) erstreckt.

7. Anlage nach Anspruch 1, ***dadurch gekennzeichnet, dass*** die Elemente fest mit dem unteren Förderer (17) verbunden sind.

8. Anlage nach Anspruch 1, ***dadurch gekennzeichnet, dass*** sie außerdem einen oberen Förderer (27) umfasst, wobei die Elemente fest mit dem oberen Förderer (27) verbunden sind.

## Claims

1. Installation (100-102) for impregnating a porous material (14) with powder (12), comprising:
- first and second electrodes (16, 26) generating an electric field within an electric field zone (E), said electrodes (16, 26) being arranged on either side of said electric field zone (E), said electric field zone (E) being passed through by the porous material (14) provided with powder (12), the electric field allowing said powder (12) to be moved relative to the porous material (14),
- a drive device (17) including a lower conveyor (17), which is arranged under the porous material and is capable of moving the porous material (14) provided with powder (12) between the first and second electrodes (16, 26), and
- a powder distribution zone (P) at which the powder (12) is deposited over the width of the porous material (14), said distribution zone (P) being located upstream of the electric field zone (E), ***characterised in that*** the installation further comprises members (15, 25, 35, 45) that extend perpendicularly to the plane of the conveyor (17) and come into contact with only a part of said porous material (14).

2. Installation according to claim 1, ***characterised in that*** the members (25, 45) are located below the porous material (14), between the lower conveyor (17) and the porous material (14).

3. Installation according to claim 1, ***characterised in that*** the members (15, 35) are located above the porous material (14).

4. Installation according to claim 1, ***characterised in that*** the members define a set of regions (31) on the surface of the porous material (14) that they face, said regions (31) being closed.

5. Installation according to claim 1, ***characterised in that*** the members form a set of protrusions (32, 33) separated from one another.

6. Installation according to claim 1, ***characterised in that*** the contact surface between the members (32) and the porous material (14) extends in a direction parallel to the plane of the lower conveyor (17).

7. Installation according to claim 1, ***characterised in that*** the members are rigidly connected to the lower conveyor (17).

8. Installation according to claim 1, ***characterised in that*** it further comprises an upper conveyor (27), the members being rigidly connected to the upper conveyor (27).
